# EUROPÄISCHE PATENTANMELDUNG

(11) **EP 2 090 802 A2**
(43) Veröffentlichungstag der Anmeldung: **19.08.2009**
(21) Anmeldenummer: 09152636.8
(22) Anmeldetag: 12.02.2009
(51) Int. Cl.: F16F 9/46

(54) **Verfahren zum Betrieb eines schaltbaren Ventils**

(30) Priorität: 13.02.2008 DE 102008008996
(71) Anmelder: ZF Friedrichshafen AG, 88038 Friedrichshafen (DE)
(72) Erfinder: Albert, Bernd, 97478 Knetzgau (DE)

(57) **Zusammenfassung**

Verfahren zum geräuscharmen Betrieb eines schaltbaren Ventils, das einen elektrisch betriebenen Aktuator aufweist, der einen Ventilkörper zwischen einer Öffnungs- und einer Schließposition betätigt, wobei das schaltbare Ventil mit einem PWM-getakteten Strom betrieben wird, der für eine Öffnungsposition eine ersten Taktfrequenz aufweist, die in Vorbereitung einer Schließbewegung des schaltbaren Ventils in eine zweite Taktfrequenz verändert wird.

## Beschreibung

Die Erfindung betrifft ein Verfahren zum Betrieb eines schaltbaren Ventils gemäß dem Oberbegriff von Patentanspruch 1.

Aus dem Stand der Technik ist es bereits seit langem bekannt, dass der Schließvorgang bei einem schaltbaren Ventil u. U. als störendes Geräusch bemerkbar ist. Bei einer industriellen Anwendung z. B. an einer Produktionsmaschine werden diese Geräusche akzeptiert, da sie nur einen Teil des Geräuschspektrums ausmachen. In einem Kraftfahrzeug liegt die Toleranzgrenze deutlich niedriger. Deshalb sind z. B. für verstellbare Dämpfventile Lösungen erarbeitet worden, um Schaltgeräusche zu minimieren bzw. ganz zu vermeiden.

Die EP 0 490 262 B1 beschreibt z. B. ein verstellbares Dämpfventil, das zwischen einem Hauptstufenventil und einem Vorstufenventil ein Kontrollventil aufweist, das erst bei Vorliegen bestimmter Druckverhältnisse eine Schließbewegung des Hauptstufenventils ermöglicht. Ähnliche Überlegungen gehen dahin, dass man ein verstellbares Dämpfventil erst dann schließt, wenn der Schwingungsdämpfer innerhalb einer Schwingbewegung einen oberen oder unteren Umkehrpunkt erreicht und damit ein geringer Differenzdruck zwischen zwei Arbeitskammern des Schwingungsdämpfers vorliegt. In diesem Betriebszustand des Schwingungsdämpfers verursacht eine Schließbewegung des verstellbaren Dämpfventils kein hörbares Schaltgeräusch.

Beide Lösungen sind jedoch u. U. mit einer Schaltverzögerung verbunden, da man im Schwingungsdämpfer erst einen bestimmten Betriebszustand (Druckverhältnisse) erreicht haben muss. Des Weiteren liegen nicht bei jedem schaltbaren Ventil derart klare Randbedingungen für die Einleitung einer Schließbewegung vor.

Die Aufgabe der vorliegenden Erfindung besteht in der Bereitstellung einer weiteren Lösung zum Betrieb eines schaltbaren Ventils, wobei eine möglichst geringe Schaltgeräuschbelastung angestrebt wird.

Erfindungsgemäß wird die Aufgabe dadurch gelöst, dass das schaltbare Ventil mit einem PWM-getakteten Strom betrieben wird, der für eine Öffnungsposition eine ersten Taktfrequenz aufweist, die in Vorbereitung einer Schließbewegung des schaltbaren Ventils in eine zweite Taktfrequenz verändert wird.

Umfangreiche Versuche haben gezeigt, dass mit der Veränderung der Taktfrequenz des Versorgungsstroms für den Aktuator des schaltbaren Ventils ein sehr gutes Geräuschverhalten erreicht werden konnte, ohne dass konstruktive Eingriffe am verstellbaren Ventil notwendig waren. Daraus ergibt sich eine sehr gute Adaptierbarkeit eines Standardventils an verschiedene Anwendungsformen.

In weiterer vorteilhafter Ausgestaltung des Verfahren wird die zweite Taktfrequenz auf ein Niveau verändert wird, das für das menschliche Ohr zumindest nur schwer vernehmbar ist. Zwar ist eine hohe Taktfrequenz mit elektrischen Verlustleistungen am Aktuator verbunden, doch ist die Betriebsdauer in dieser Taktfrequenz sehr kurz, so dass diese erhöhten Verlustleistungen nicht merklich von Bedeutung sind.

Gemäß einem vorteilhaften Unteranspruch dient als Bezug für die erste Taktfrequenz die Kammertonfrequenz A. Die Kammertonfrequenz A, länderspezifisch ca. 400 bis 460 Hz, wird vom menschlichen Ohr als angenehm empfunden. Sollte also das Ventil auch in der geöffneten Betriebsstellung Geräusche verursachen, dann stören sie zumindest nicht wesentlich.

Des Weiteren ist vorgesehen, dass die erste Taktfrequenz ein Vielfaches der Kammertonfrequenz A aufweist. Wenn man den Frequenzunterschied zwischen der ersten Taktfrequenz und der zweiten Taktfrequenz klein hält, dann wird für die Umschaltung zwischen den Taktfrequenzen und das Anpassen des Aktuators auf die zweite Taktfrequenz zur Vorbereitung der Ventilschließbewegung eine deutlich kleinere Betriebszeit benötigt.

Als zusätzliche Maßnahme besteht die Möglichkeit, dass das Tastverhältnis zwischen eingeschalteter Stromversorgung und ausgeschalteter Stromversorgung in Vorbereitung einer Ventilschließbewegung verändert wrid. Bei einem elektrisch betriebenen Aktuator wirkt häufig eine Spule gegen eine Federkraft auf einen Anker. Das Kraftverhältnis Spulenkraft/Federkraft beeinflusst das Schließverhalten, z. B. indem ein deutlicher Kraftüberschuss der Feder zu einer sehr schnellen Schließbewegung führt, die wiederum als Anschlag hörbar ist.

Anhand der folgenden Figurenbeschreibung soll die Erfindung näher erläutert werden.

Es zeigt:
- Fig. 1: Anwendungsbeispiel für ein schaltbares Ventil
- Fig. 2: Ausführungsbeispiel für einen schaltbares Ventil
- Fig. 3: Taktfrequenz für den Betrieb des verstellbaren Ventils nach Fig. 1
- Fig. 4: Tastverhältnis für das verstellbare Ventil nach Fig. 1

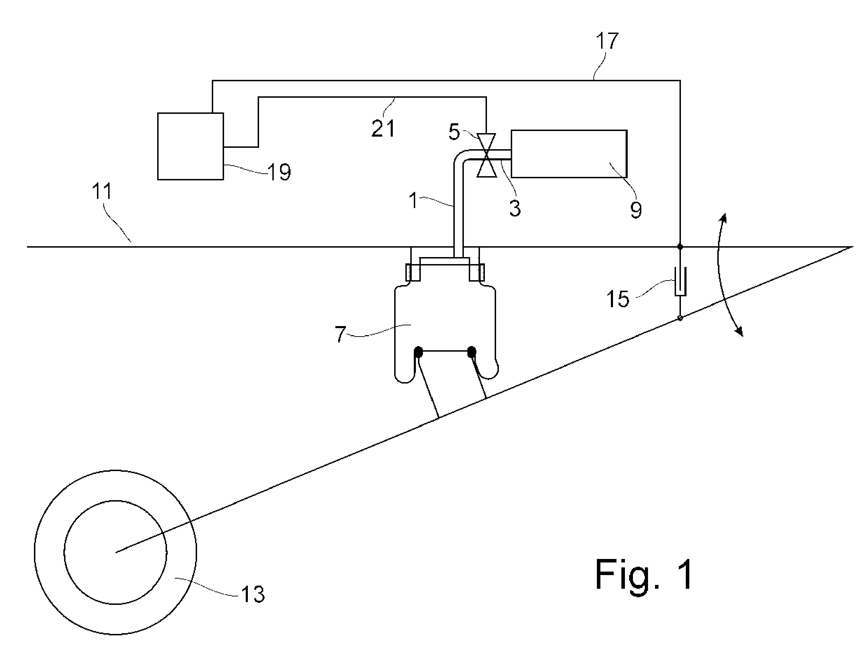

Die Figur 1 zeigt beispielhaft eine Anwendung für ein über Druckmediumleitungen 1; 3 angeschlossenes elektrisch verstellbares Ventil 5 zwischen einer an sich bekannten Luftfeder 7 und einem Zusatzvolumen in einem Speicher 9. Die Luftfeder 7 stützt einen Fahrzeugaufbau 11 auf einer Fahrzeugachse 13 ab, wobei der konkrete Anwendungsfall für die Erfindung untergeordnet ist. Zwischen der Fahrzeugachse 13 und dem Fahrzeugaufbau 11 ist ein Signalgeber 15 angeordnet, der z. B. den Abstand zwischen der Fahrzeugachse 13 und dem Fahrzeugaufbau 11 bestimmt. Dieses Signal wird über eine Signalleitung 17 einer Rechnereinheit 19 zugeführt, die einen Stellstrom für das verstellbare Ventil 5 bestimmt. Der Stellstrom fließt über eine Leitung 21 an das verstellbare Ventil 5 und ist nicht konstant ein- oder ausgeschaltet, sondern wird mit einer Frequenz zwischen diesen beiden Zuständen getaktet. Dieses sogenannte PWM-Verfahren führt zu einem günstigeren Stromverbrauch im Vergleich zu einem Dauerstrombetrieb.

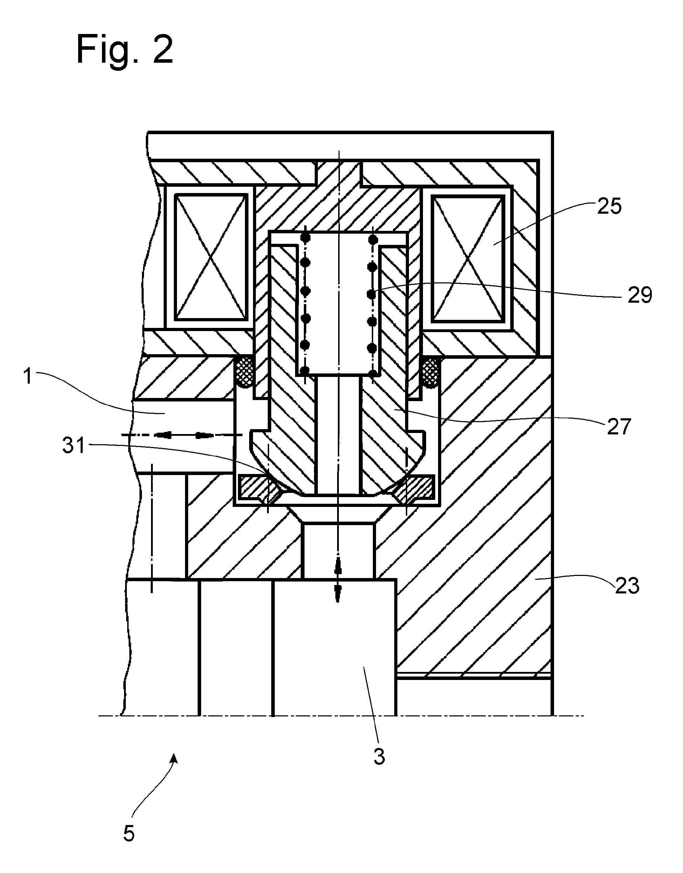

Die Figur 2 beschränkt sich auf eine mögliche Ausführungsform eines verstellbaren Ventils 5 nach Fig. 1. In einem Gehäuse 23 ist eine Spule 25 angeordnet, die in Abhängigkeit der Stromversorgung eine Magnetkraftzugkraft auf einen Anker in der Funktion eines Ventilkörpers 27 ausübt. Die Spule 25 bildet für den Ventilkörper 27 einen Aktuator. Der Ventilkörper 27 wird von einer Schließfeder 29 auf eine Ventilsitzfläche 31 in die dargestellte geschlossene Betriebsstellung vorgespannt. Der Ablauf der Schließbewegung des Ventilkörpers 27 ist u. a. von den beiden vorgenannten entgegengesetzt wirksamen Kräften abhängig.

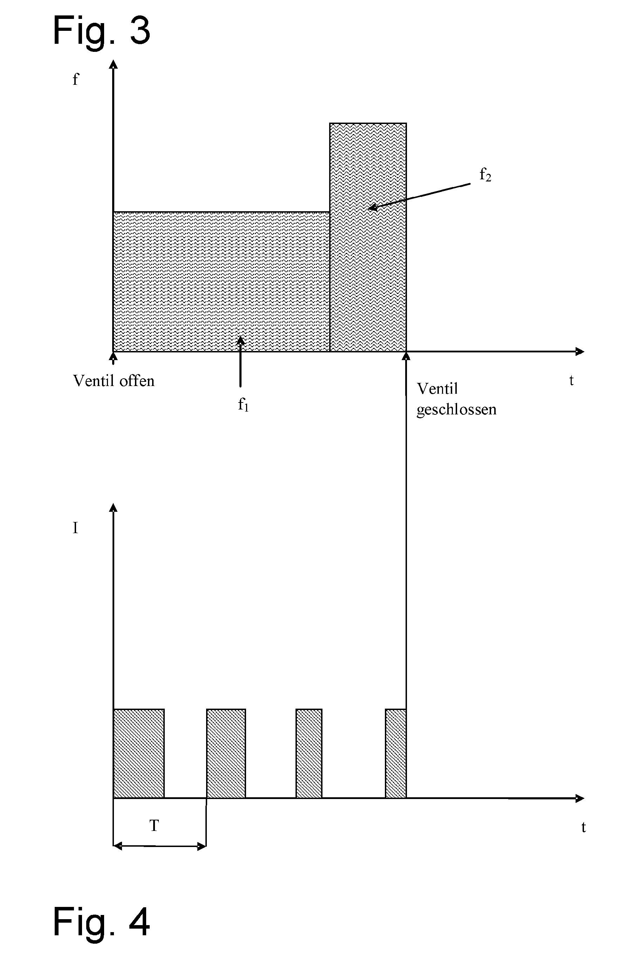

Die Figur 3 zeigt eine Funktion der Taktfrequenz f des Stellstroms I für den elektrisch betätigbaren Aktuator 25 bezogen auf die Ventibetriebsstellung des verstellbaren Ventils 5. Bei einem geöffneten Ventil 5 wird der der Stellstrom mit einer ersten Taktfrequenz f₁ betrieben. Diese Taktfrequenz ist derart gewählt, dass sie für das menschliche Gehör nicht oder zumindest als angenehm empfunden wird. Als Bezug für die erste Taktfrequenz f₁ kann z. B. die Frequenz des Kammertons "A" dienen, die etwa zwischen 400 und 460 Hz liegt. Im vorliegenden Beispiel weist die erste Taktfrequenz f₁ ein Vielfaches der Kammertonfrequenz "A" auf, z. B. 800 hz.. Wenn von der Rechnereinheit 19 festgelegt wird, dass das verstellbare Ventil 5 geschlossen werden soll, also das Zusatzvolumen im Speicher 9 von der Luftfeder 7 zu trennen ist, dann wird in Vorbereitung einer Schließbewegung des schaltbaren Ventils eine zweite Taktfrequenz f₂ für den Stellstrom I gewählt. Die zweite Taktfrequenz f₂ weist ein Niveau auf, das für das menschliche Ohr nur schwer vernehmbar sein soll. Bei einer Frequenzanhebung von der ersten auf die zweite Taktfrequenz ist es sinnvoll, wenn die erste Taktfrequenz f₁ nicht zu niedrig ist, um keine Verlustzeiten für das Anpassen des Aktuators 25 auf die zweite Taktfrequenz f₂ zu verursachen. Wenn die zweite Taktfrequenz f₂ für den Stellstrom erreicht und ggf. eine gewisse Zeit gehalten wurde, wird der Stellstrom I abgeschaltet, wobei das Ventil 5 die geschlossene Betriebsstellung zumindest geräuscharm einnimmt.

Die Fig. 4 zeigt die Einschaltfunktion bezogen auf die Zeit. Die schraffierten Bereiche stehen für eine definierte Stromstärke I und eine Einschaltdauer t. Die Bereiche zwischen den schraffierten Teilen stehen für Strom I = 0. Wenn das Ventil 5 geschlossen werden soll, dann wird innerhalb einer Periode T das Tastverhältnis zwischen eingeschalteter und ausgeschalteter Stromversorgung dahingehend verändert, dass die Anteile der Stromeinschaltanteile immer kleiner werden und damit auch die wirksame Magnetkraft in Öffnungsrichtung auf den Ventilkörper 27 abnimmt. Damit wird ebenfalls eine geräuschoptimierte Schließbewegung des Ventilkörpers gefördert.

## Patentansprüche

1. Verfahren zum geräuscharmen Betrieb eines schaltbaren Ventils, das einen elektrisch betriebenen Aktuator aufweist, der einen Ventilkörper zwischen einer Öffnungs- und einer Schließposition betätigt"
**dadurch gekennzeichnet,**
**dass** das schaltbare Ventil (5) mit einem PWM-getakteten Strom (I) betrieben wird, der für eine Öffnungsposition eine ersten Taktfrequenz (f₁) aufweist, die in Vorbereitung einer Schließbewegung des schaltbaren Ventils (5) in eine zweite Taktfrequenz (f₂) verändert wird.

2. Verfahren nach Anspruch 1,
**dadurch gekennzeichnet,**
**dass** die zweite Taktfrequenz (f₂) auf ein Niveau verändert wird, das für das menschliche Ohr zumindest nur schwer vernehmbar ist.

3. Verfahren nach Anspruch 1,
**dadurch gekennzeichnet,**
**dass** als Bezug für die erste Taktfrequenz (f₁) die Kammertonfrequenz A dient.

4. Verfahren nach Anspruch 3,
**dadurch gekennzeichnet,**
**dass** die erste Taktfrequenz (f₁) ein Vielfaches der Kammertonfrequenz A aufweist.

5. Verfahren nach Anspruch 1,
**dadurch gekennzeichnet,**
**dass** das Tastverhältnis zwischen eingeschalteter Stromversorgung und ausgeschalteter Stromversorgung in Vorbereitung einer Ventilschließbewegung verändert wird.
